# EUROPÄISCHE PATENTANMELDUNG

(11) **EP 4 653 961 A1**
(43) Veröffentlichungstag der Anmeldung: **26.11.2025**
(21) Anmeldenummer: 24177675.6
(22) Anmeldetag: 23.05.2024
(51) Int. Cl.: G05B 19/042

(54) **FELDGERÄT MIT RFID-TRANSPONDER UND KOMMUNIKATIONSEINHEIT**

(71) Anmelder: Murrelektronik GmbH, 71570 Oppenweiler (DE)
(72) Erfinder: Ruf, Henrik, 71570 Oppenweiler (DE); Wolff, Ingo, 71570 Oppenweiler (DE); Hinze, Jörg, 71570 Oppenweiler (DE)
(74) Vertreter: Prinz & Partner mbB

(57) **Zusammenfassung**

Die Erfindung betrifft ein Feldgerät (24) für eine Industrieanlage (10), umfassend einen internen RFID-Transponder (32), der dazu ausgebildet ist, in einem ersten Betriebsmodus des Feldgeräts (24) mittels eines extern bereitgestellten elektromagnetischen Wechselfeldes (34) Daten an ein externes Gerät (36) zu senden und/oder Daten von einem externen Gerät (36) zu empfangen. Ferner umfasst das Feldgerät (24) eine Kommunikationseinheit (38), die dazu ausgebildet ist, in einem zweiten Betriebsmodus des Feldgeräts (24) ein elektromagnetisches Wechselfeld (34) zu erzeugen, mit dem Daten an ein externes Gerät (36) gesendet und/oder von einem externen Gerät (36) empfangen werden können.

Außerdem betrifft die Erfindung ein System (26) mit einem ersten erfindungsgemäßen Feldgerät (24, 28) und einem baugleichen zweiten Feldgerät (24, 30) sowie ein Verfahren zum Austauschen und ein Verfahren zum Konfigurieren eines Feldgeräts (24).

## Beschreibung

Die Erfindung betrifft ein Feldgerät für eine Industrieanlage sowie ein System mit einem ersten und einem zweiten Feldgerät. Außerdem betrifft die Erfindung ein Verfahren zum Austauschen und ein Verfahren zum Konfigurieren eines Feldgeräts.

Moderne Industrieanlagen werden meist dezentral aufgebaut und umfassen eine Vielzahl von räumlich verteilt angeordneten Automatisierungskomponenten.

Oftmals werden zahlreiche gleiche Automatisierungskomponenten verbaut, beispielsweise mehrere Feldbuskomponenten, Infrastrukturelemente wie Ethernet-Switche, Sensoren oder Aktoren des gleichen Typs. Dies führt zu Schwierigkeiten bei der Identifikation der einzelnen Komponenten.

Eine erste aus dem Stand der Technik bekannte Möglichkeit, die einzelnen Komponenten zu identifizieren, basiert auf der Bestimmung ihrer jeweiligen topologischen Position innerhalb der Industrieanlage. Hierbei wird für die komplette Verdrahtung im Vorfeld ein Schema festgelegt. Die Verdrahtung muss dann nach exakt diesem Schema vorgenommen werden. Dies ist jedoch aufwendig, fehleranfällig und unflexibel.

Eine weitere aus dem Stand der Technik bekannte Möglichkeit, Komponenten zuzuordnen und zu identifizieren, besteht darin, die jeweiligen Komponenten mit eindeutigen Namen und/oder Adressen zu kennzeichnen. Hierfür können beispielsweise Drehcodierschalter genutzt werden.

Das Vergeben der Adressen und/oder Namen ist jedoch ebenfalls aufwendig und fehleranfällig. So funktionieren beispielsweise verschiedene Bussysteme nicht, wenn Adressen oder Namen doppelt vergeben werden.

Außerdem sind den adressierten Komponenten typischerweise bestimmte Funktionen fest zugeordnet, egal an welcher Position in der Industrieanlage sie sich befinden. Werden zwei Komponenten bei der Installation oder Wartung vertauscht bzw. falsch in der Topologie positioniert, so führt dies zu Fehlern und im schlimmsten Fall sogar zu einem Anlagenstillstand.

Darüber hinaus ist es wünschenswert, zusätzlich zur Identifikation weitere Informationen über die jeweiligen Komponenten zu erfassen bzw. abrufen zu können, beispielsweise Betriebsstunden- und/oder Fehlerdiagnosedaten sowie lokale Passwörter und/oder Sicherheitszertifikate.

Auch in diesem Zusammenhang kann es nachteilig sein, sich der aus dem Stand der Technik bekannten Methoden zu bedienen. So sind beispielsweise bei der Übertragung bzw. Verteilung lokaler Passwörter oder Sicherheitszertifikate durch konventionelle Bussysteme die Daten vor Zugriffen Dritter oft nicht hinreichend geschützt.

Die Aufgabe der Erfindung ist es, die aus dem Stand der Technik bekannten Nachteile zu beheben, indem ein technisch einfach aufgebautes, bedienerfreundliches und fehlerunanfälliges System zur Industrieanlagenautomatisierung bereitgestellt wird.

Die Aufgabe wird erfindungsgemäß gelöst durch ein Feldgerät für eine Industrieanlage, umfassend einen internen RFID-Transponder und eine Kommunikationseinheit.

Der interne RFID-Transponder, bspw. ein RFID-Tag, ist dazu ausgebildet, in einem ersten Betriebsmodus des Feldgeräts mittels eines extern bereitgestellten elektromagnetischen Wechselfeldes Daten an ein externes Gerät zu senden und/oder Daten von einem externen Gerät zu empfangen.

Bei dem externen Gerät kann es sich beispielsweise um ein Smartphone, ein Diagnosegerät und oder ein weiteres erfindungsgemäßes Feldgerät handeln.

Die Kommunikationseinheit ist zudem dazu ausgebildet, in einem zweiten Betriebsmodus des Feldgeräts ein elektromagnetisches Wechselfeld zu erzeugen, mit dem Daten an ein externes Gerät gesendet und/oder von einem externen Gerät empfangen werden können.

Grundsätzlich ist eine Datenübertragung mittels NFC (Near Field Communication) als einem auf der RFID-Technologie basierendem Übertragungsstandard durch den RFID-Transponder bzw. die Kommunikationseinheit denkbar. Insofern kann der interne RFID-Transponder ein NFC-Tag sein.

Bei den Daten handelt es sich insbesondere um gerätespezifische Daten, beispielsweise Adressen, Parameter, digitale Zertifikate, wie "domain-validated"-Zertifikate (DV-Zertifikate) und/oder "Extended-Validation"-Zertifikate (EV-Zertifikate), SSL-Zertifikate (Secure Sockets Layer) oder TLS-Zertifikate (Transport Layer Security), Zertifikate der Funktionalen Sicherheit wie die SNN (Safety Network Number) bei EtherNet/IP^{™}-CIP-Safety^{™}, private oder öffentliche Schlüssel, Wartungsinformationen, Informationen über den Einbauort des Feldgeräts innerhalb der Industrieanlage und/oder Zugangsinformationen zu einem digitalen Zwilling, insbesondere über eine URI (Uniform Resource Identifier).

Ein Grundgedanke der Erfindung ist es, innerhalb desselben Feldgeräts zwei Schnittstellen zur Datenübertragung vorzusehen, nämlich den internen RFID-Transponder und die Kommunikationseinheit.

Der interne RFID-Transponder dient dabei als passive Schnittstelle. Passiv bedeutet in diesem Zusammenhang, dass der interne RFID-Transponder das elektromagnetische Wechselfeld zur Datenübertragung nicht selbst bereitstellt, sondern sich eines extern bereitgestellten elektromagnetischen Wechselfeldes bedient. Das Senden von Daten über den internen RFID-Transponder funktioniert durch eine Modulation des extern bereitgestellten Feldes, also eine Veränderung des extern bereitgestellten Feldes.

Dies hat den Vorteil, dass Daten selbst im Falle eines Defekts und/oder im ausgeschalteten Zustand von dem erfindungsgemäßen Feldgerät oder an das erfindungsgemäße Feldgerät übertragen werden können.

Im Gegensatz dazu ist die Kommunikationseinheit eine aktive Schnittstelle und dazu ausgebildet, ein elektromagnetisches Wechselfeld zu erzeugen, mit dem Daten an ein externes Gerät gesendet und/oder von einem externen Gerät empfangen werden können.

Dies ermöglicht eine Kommunikation mit externen Geräten, insbesondere mit passiven, defekten und/oder ausgeschalteten externen Geräten.

Auch eine Kommunikation mit mehreren externen Geräten gleichzeitig ist denkbar.

Selbstverständlich ist so auch eine Kommunikation mit einem externen Gerät desselben Typs möglich, also mit einem weiteren erfindungsgemäßen Feldgerät. Es muss dazu lediglich eines der beiden Geräte aktiv sein, sodass dessen Kommunikationseinheit ein elektromagnetisches Wechselfeld bereitstellen kann, welches dann durch den internen RFID-Transponder des anderen Geräts zur Datenübertragung genutzt werden kann.

In einer Ausführungsvariante ist der erste Betriebsmodus dadurch charakterisiert, dass sich das Feldgerät in einem passiven Zustand befindet, insbesondere in einem ausgeschalteten Zustand bzw. einem Stand-by-Modus. Beispielsweise kann das Feldgerät zum Zwecke einer Wartung oder eines geplanten Austauschs ausgeschaltet sein bzw. von einer Spannungsversorgung getrennt sein. In diesem Zustand ist dennoch eine Kommunikation mit externen Geräten mittels des internen RFID-Transponders möglich. Über den internen RFID-Transponder können Daten des Feldgeräts abgerufen bzw. bereitgestellt werden, insbesondere gerätespezifische Daten, beispielsweise Diagnosedaten, Adressdaten oder Daten über eine Softwareversion und/oder eine Konfiguration des Feldgeräts, die dann zur Wartung und/oder Einrichtung eines Ersatzgeräts genutzt werden können.

Die gerätespezifischen Daten des Feldgeräts können im internen RFID-Transponder oder in einem mit dem internen RFID-Transponder verbundenen Speicher gespeichert sein. Insbesondere können die gerätespezifischen Daten ausschließlich im internen RFID-Transponder oder verbundenen Speicher gespeichert sein, wodurch Redundanz vermieden wird.

Es ist ferner denkbar, dass der zweite Betriebsmodus dadurch charakterisiert ist, dass sich das Feldgerät in einem aktiven Zustand befindet, insbesondere in einem eingeschalteten Zustand. Dies bedeutet, dass eine Spannungsversorgung des Feldgeräts vorliegt. In diesem Zustand kann das Feldgerät selbst ein elektromagnetisches Wechselfeld zur Kommunikation mit externen Geräten bereitstellen, insbesondere zur Kommunikation mit passiven externen Geräten.

In einer Variante des erfindungsgemäßen Feldgeräts ist die Kommunikationseinheit dazu ausgebildet, im zweiten Betriebsmodus Daten an einen externen RFID-Transponder zu senden und/oder Daten von dem externen RFID-Transponder auszulesen. Der externe RFID-Transponder kann in einem externen Gerät verbaut sein, insbesondere in einem externen Gerät desselben Typs.

Es ist aber auch denkbar, dass der externe RFID-Transponder ein geräteexterner RFID-Transponder ist. Beispielsweise kann der geräteexterne RFID-Transponder in oder an einer Halterung für das Feldgerät innerhalb der Industrieanlage oder an einem Einbauort direkt am Maschinenbett angebracht sein. Wenn das erfindungsgemäße Feldgerät in die Halterung eingesetzt bzw. am Einbauort angebracht ist, können mittels der Kommunikationseinheit Daten vom Feldgerät an den geräteexternen RFID-Transponder übertragen und in diesem oder einem verbundenen Speicher abgelegt werden. Im Austauschfall kann das Feldgerät entfernt und ein, insbesondere baugleiches, Ersatzgerät in die Halterung eingesetzt bzw. am Einbauort, insbesondere dem Maschinenbett, angebracht werden. Das Ersatzgerät kann die im geräteexternen RFID-Transponder angelegten Daten mittels seiner Kommunikationseinheit auslesen bzw. erhält das Ersatzgerät die entsprechenden Daten vom geräteexternen RFID-Transponder als Antwortsignal.

Es kann vorgesehen sein, dass eine Kopie der ausgelesenen bzw. erhaltenen Daten im internen RFID-Transponder des Ersatzgeräts angelegt wird.

Es ist auch denkbar, dass der interne oder ein externer RFID-Transponder direkt am Feldgerät befestigt ist, beispielsweise durch einen Schnappverbinder, Schrauben, Klebstoff oder einen Einschub. Dies ermöglicht es, Informationen für das Feldgerät im Vorfeld vorzubereiten und an das Feldgerät zu übertragen, insbesondere durch das Anbringen des RFID-Transponders am Feldgerät und Auslesen mittels der Kommunikationseinheit.

Der interne oder externe RFID-Transponder kann als Aufkleber ausgebildet sein. Dies ermöglicht eine schnelle und technisch einfache Anbringung am Feldgerät.

Dies ist insbesondere dann der Fall, wenn der RFID-Transponder als RFID-Tag, RFID-Label oder RFID-Etikett ausgebildet ist, also als passiver RFID-Transponder, der die Energieversorgung aus dem elektromagnetischen Wechselfeld entnimmt.

Der interne RFID-Transponder des erfindungsgemäßen Feldgeräts umfasst beispielsweise eine Antenne, eine elektrische Schaltung zum Empfangen und Senden von Daten und einen digitalen Schaltkreis mit einem Speicher. Die gesamte Elektronik kann dabei in einem einzigen Mikrochip integriert sein. Der Speicher kann Teil des Mikrochips oder separat ausgebildet sein.

Der interne RFID-Transponder ist beispielsweise dazu ausgebildet, in einem Frequenzband im Langwellen- bzw. Niederfrequenzbereich ("low frequency" - LF) betrieben zu werden.

In einer weiteren Ausführungsform des Feldgeräts ist der interne RFID-Transponder dazu ausgebildet, Energie für seinen Betrieb aus einer Energiequelle, bspw. einer Batterie oder einem Kondensator, und/oder einem extern bereitgestellten elektromagnetischen Wechselfeld zu beziehen. Die Energiequelle lässt sich von dem extern bereitgestellten elektromagnetischen Wechselfeld aufladen.

Insbesondere kann die vom externen elektromagnetischen Wechselfeld bereitgestellte Energie während des Kommunikationsvorganges zur Stromversorgung des internen RFID-Transponders genutzt werden, beispielsweise zur Stromversorgung des Mikrochips. Dies entspricht der passiven Energieversorgung des RFID-Transponders.

Alternativ kann die Energiequelle, bspw. eine Batterie oder ein Kondensator, Energie zum Betrieb des Mikrochips bereitstellen. Mit anderen Worten kann es sich beim internen RFID-Transponder also um einen sogenannten semiaktiven Transponder handeln.

Auch die Verwendung eines aktiven internen RFID-Transponders ist denkbar. In diesem Falle kann der interne RFID-Transponder mittels der von der Energiequelle, bspw. der Batterie oder dem Kondensator, bereitgestellten Energie selbst ein elektromagnetisches Wechselfeld zur Datenübertragung erzeugen.

Insofern kann es sich um einen passiven RFID-Transponder (Energie aus elektromagnetischen Wechselfeld), einen semi-aktiven RFID-Transponder (interne Energiequelle nur zur Stützung bzw. Versorgung des Mikrochips) oder einen aktiven RFID-Transponder (aktive Erzeugung eines elektromagnetischen Wechselfelds) handeln.

Der interne RFID-Transponder ist vorzugsweise im oder unmittelbar am Feldgerät verbaut. Beispielsweise ist er, wie oben beschrieben, mit einem Schnappverbinder, Schrauben, Klebstoff oder einem Einschub an einem Gehäuse des Feldgeräts fixiert. Dadurch ist er gut zugänglich und kann bei Bedarf einfach ausgetauscht werden.

In einer Ausführungsvariante der Erfindung sind der interne RFID-Transponder und die Kommunikationseinheit elektrisch voneinander isoliert.

Der interne RFID-Transponder kann ein eigenständiges Bauteil innerhalb des Feldgeräts sein. Auf eine elektrische Anbindung des internen RFID-Transponders kann im Extremfall komplett verzichtet werden, was wiederrum Ressourcen einspart.

In diesem Zusammenhang ist es denkbar, dass durch die Kommunikationseinheit desselben Feldgeräts oder eines anderen externen Geräts ein elektromagnetisches Wechselfeld bereitstellbar ist, durch das der interne RFID-Transponder mit der Kommunikationseinheit bzw. dem externen Gerät kommunizieren kann.

Vereinfacht ausgedrückt kann also die Kommunikationseinheit desselben Feldgeräts oder ein externes Gerät als Lesegerät für den internen RFID-Transponder genutzt werden.

Alternativ oder zusätzlich ist eine direkte, insbesondere kabelgebundene, Kommunikation zwischen dem internen RFID-Transponder und der Kommunikationseinheit denkbar.

Es kann auch eine Datenverarbeitungseinheit, beispielsweise ein Mikrocontroller, vorgesehen sein, der sowohl mit dem internen RFID-Transponder als auch der Kommunikationseinheit verbunden ist und den Datenaustauch über beide Schnittstellen steuert.

Die Aufgabe der Erfindung wird ferner gelöst durch ein System umfassend ein erstes erfindungsgemäßes Feldgerät und ein zweites erfindungsgemäßes Feldgerät, insbesondere wobei das erste Feldgerät und das zweite Feldgerät baugleich sind.

Das erste Feldgerät und das zweite Feldgerät sind dazu ausgebildet, miteinander zu kommunizieren, wenn sich eines der Feldgeräte im ersten Betriebsmodus befindet und sich das andere Feldgerät im zweiten Betriebsmodus befindet.

Es können also grundsätzlich Daten zwischen dem ersten und dem zweiten Feldgerät übertragen werden, selbst wenn sich eines der Feldgeräte in einem passiven Zustand befindet, insbesondere abgeschaltet oder defekt ist.

Die Vorteile, die zum erfindungsgemäßen Feldgerät diskutiert wurden, gelten für das System in gleicher Weise.

Die Aufgabe der Erfindung wird außerdem gelöst durch ein Verfahren zum Austauschen eines erfindungsgemäßen Feldgeräts durch ein baugleiches Ersatzgerät. Das Verfahren umfasst die folgenden Schritte:
Speichern von gerätespezifischen Daten;
Bereitstellen eines elektromagnetischen Wechselfeldes mittels der Kommunikationseinheit des Ersatzgerätes;
Auslesen der gespeicherten gerätespezifischen Daten durch das Ersatzgerät mittels des bereitgestellten elektromagnetischen Wechselfeldes;
Konfigurieren des Ersatzgeräts mittels der ausgelesenen gerätespezifischen Daten; und
Austauschen des auszutauschenden Feldgeräts durch das Ersatzgerät.

Selbstverständlich gelten die Vorteile, die zum erfindungsgemäßen Feldgerät sowie zum System diskutiert wurden, für das Verfahren ebenfalls in gleicher Weise.

Das Auslesen umfasst beispielsweise einen Kopiervorgang der gerätespezifischen Daten, insbesondere von Parametern, Adressen, Namen und/oder Zertifikaten. Die kopierten gerätespezifischen Daten können dann zum Konfigurieren des Ersatzgeräts verwendet werden.

Insbesondere können die kopierten gerätespezifischen Daten auch Zugangsinformationen zu weiteren Datenquellen enthalten, insbesondere eine URI, über die dann weitere Daten zum Konfigurieren bezogen werden können.

Während des Konfigurierens werden für die Funktion des Ersatzgeräts relevante gerätespezifische Daten herangezogen. Je nach Verwendung können verschiedene Daten relevant sein. Beispielsweise können Gerätenamen, Adressen, Parameter und/oder Zertifikate relevante gerätespezifische Daten sein.

In einer Ausführungsvariante des Verfahrens ist das Ersatzgerät zum Bereitstellen des elektromagnetischen Wechselfeldes an eine Energie- bzw. Spannungsversorgung angeschlossen. Beispielsweise kann das Ersatzgerät an ein Kabel bzw. an eine elektrische Leitung angeschlossen sein, über die es mit elektrischer Energie versorgt wird.

Beim Auslesen der gespeicherten gerätespezifischen Daten durch das Ersatzgerät muss das auszutauschende Feldgerät selbst nicht mit elektrischer Energie versorgt werden. Das Ersatzgerät kann relevante Daten aus dem auszutauschenden Feldgerät, insbesondere dessen internen RFID-Transponder oder einem damit verbundenen Speicher, durch das von ihm selbst bereitgestellte elektromagnetische Wechselfeld auslesen.

Insofern kann das Auslesen der gespeicherten gerätespezifischen Daten aus dem auszutauschenden Feldgerät durch eine Datenübertragung zwischen der Kommunikationseinheit des Ersatzgeräts und dem internen RFID-Transponder des auszutauschenden Feldgeräts erfolgen.

Das auszutauschende Feldgerät kann sich beim Übertragen der gerätespezifischen Daten im ersten Betriebsmodus befinden, insbesondere also in einem passiven Zustand. Es ist denkbar, dass selbst dann gerätespezifische Daten übertragen werden können, wenn das auszutauschende Feldgerät ausgeschaltet oder defekt ist. Die Daten gehen in diesen Fällen also nicht verloren, sondern können weiterhin abgerufen und genutzt werden.

Denkbar ist auch, dass das Auslesen der Daten dadurch initiiert wird, dass das auszutauschende Feldgerät und das Ersatzgerät aneinandergehalten werden. Alternativ oder zusätzlich kann das Auslesen der Daten auch durch eine Nutzereingabe gestartet werden. Diese Ausgestaltungen des Verfahrens sind besonders nutzerfreundlich und wenig fehleranfällig.

In einer alternativen Ausführungsvariante des Verfahrens ist vorgesehen, dass die gerätespezifischen Daten in einem geräteexternen RFID-Transponder gespeichert werden, der an einem Einbauort innerhalb einer Industrieanlage fest verbaut ist, und dass das Auslesen aus dem geräteexternen RFID-Transponder erfolgt.

Bevorzugt ist der Einbauort eine Feldgerätehalterung und/oder eine Position an einem Maschinenbett.

Solange das auszutauschende Feldgerät in die Feldgerätehalterung eingesetzt ist oder über dem am Maschinenbett angebrachten RFID-Transponder positioniert ist, kann es mittels seiner Kommunikationseinheit gerätespezifische Daten in dem geräteexternen RFID-Transponder oder einem damit verbundenen Speicher ablegen.

Im Austauschfall kann das auszutauschende Feldgerät dann durch das Ersatzgerät ersetzt werden, indem dieses in die Feldgerätehalterung eingesetzt wird bzw. über dem am Maschinenbett angebrachten RFID-Transponder positioniert wird.

Das Ersatzgerät kann dann wiederum mit seiner Kommunikationseinheit die im geräteexternen RFID-Transponder abgelegten gerätespezifischen Daten abrufen und nutzen.

Das auszutauschende Feldgerät und das Ersatzgerät müssen in dieser Ausführungsform des Verfahrens also nicht in direktem Kontakt zueinander gebracht werden, was insbesondere dann vorteilhaft ist, wenn beide Geräte nicht gleichzeitig zur Verfügung stehen. Beispielsweise kann das auszutauschende Feldgerät bereits in Reparatur gegeben werden, während noch auf eine Lieferung des Ersatzgeräts gewartet wird.

Die Aufgabe der Erfindung wird ferner gelöst durch ein Verfahren zum Konfigurieren eines erfindungsgemäßen Feldgeräts. Das Verfahren umfasst die Schritte:
Bereitstellen eines elektromagnetischen Wechselfeldes, das gerätespezifische Daten umfasst, mittels einer Kommunikationseinheit eines Logistiksystems;
Empfangen und speichern der gerätespezifischen Daten durch den internen RFID-Transponder des Feldgeräts, während sich das Feldgerät innerhalb einer Verpackung befindet; und
Konfigurieren des Feldgeräts mittels der gespeicherten gerätespezifischen Daten.

Auch für dieses Verfahren gelten die Vorteile, die zum erfindungsgemäßen Feldgerät sowie zum System und zum Austauschverfahren diskutiert wurden in gleicher Weise.

Durch das erfindungsgemäße Verfahren zum Konfigurieren ist es möglich, schnell und mit geringem technischem Aufwand kundenspezifische Geräteanpassungen durchzuführen, ohne das Feldgerät hierfür mechanisch mit externen Hardwarekomponenten verbinden zu müssen.

Über den internen RFID-Transponder können gerätespezifischen Daten, insbesondere Konfigurierdaten, empfangen und abgespeichert werden, selbst dann, wenn sich das Feldgerät in einem ausgeschalteten Zustand innerhalb der Verpackung befindet.

Des Weiteren können mittels der Kommunikationseinheit des Logistiksystems während eines Logistikprozesses Daten aus dem Feldgerät gelesen werden, insbesondere eine Seriennummer und/oder Losnummer. Dies ermöglicht eine einfache Zuordnung zu einer Lieferung und verbessert die Rückverfolgbarkeit des Feldgeräts.

Wird das Feldgerät anschließend am Einsatzort ausgepackt und an eine Energieversorgung angeschlossen, können die im internen RFID-Transponder abgelegten Daten über eine direkte elektrische Anbindung des internen RFID-Transponders bzw. eines mit dem internen RFID-Transponder verbundenen Speichers oder über die Kommunikationseinheit ausgelesen und die Konfiguration durchgeführt werden.

Grundsätzlich kann das Auslesen der gespeicherten gerätespezifischen Daten mittels des bereitgestellten elektromagnetischen Wechselfeldes dem Erzeugen des elektromagnetischen Wechselfeldes entsprechen, welches vom auszutauschenden, bspw. defekten, Feldgerät, insbesondere dessen internen RFID-Transponder, moduliert wird, um ein Antwortsignal zu erzeugen, was empfangen wird. Das Antwortsignal wird entsprechend verarbeitet, um so die gespeicherten gerätespezifischen Daten des auszutauschenden Feldgeräts zu erhalten.

Mit anderen Worten wird das erzeugte elektromagnetische Wechselfeld durch das auszutauschende Feldgerät verändert, insbesondere durch dessen internen RFID-Transponder. Die Veränderung des erzeugten elektromagnetischen Wechselfeldes wird wahrgenommen und als Antwort interpretiert, wodurch die gespeicherten gerätespezifischen Daten erhalten werden.

Weitere Merkmale und Vorteile der Erfindung ergeben sich aus der nachfolgenden Beschreibung sowie aus den Zeichnungen, auf die Bezug genommen wird. In den Zeichnungen zeigen:
- Fig. 1 eine schematische Darstellung einer Industrieanlage mit mehreren örtlich verteilt angeordneten Automatisierungskomponenten;
- Fig. 2 eine schematische Darstellung eines erfindungsgemäßen Systems mit zwei erfindungsgemäßen Feldgeräten einer beispielhaften Ausführungsform;
- Fig. 3 eine schematische Darstellung eines erfindungsgemäßen Feldgeräts einer beispielhaften Ausführungsform sowie ein externes Gerät und einen geräteexternen RFID-Transponder; und
- Fig. 4 eine schematische Darstellung eines Logistiksystems und ein verpacktes erfindungsgemäßes Feldgerät einer beispielhaften Ausführungsform.

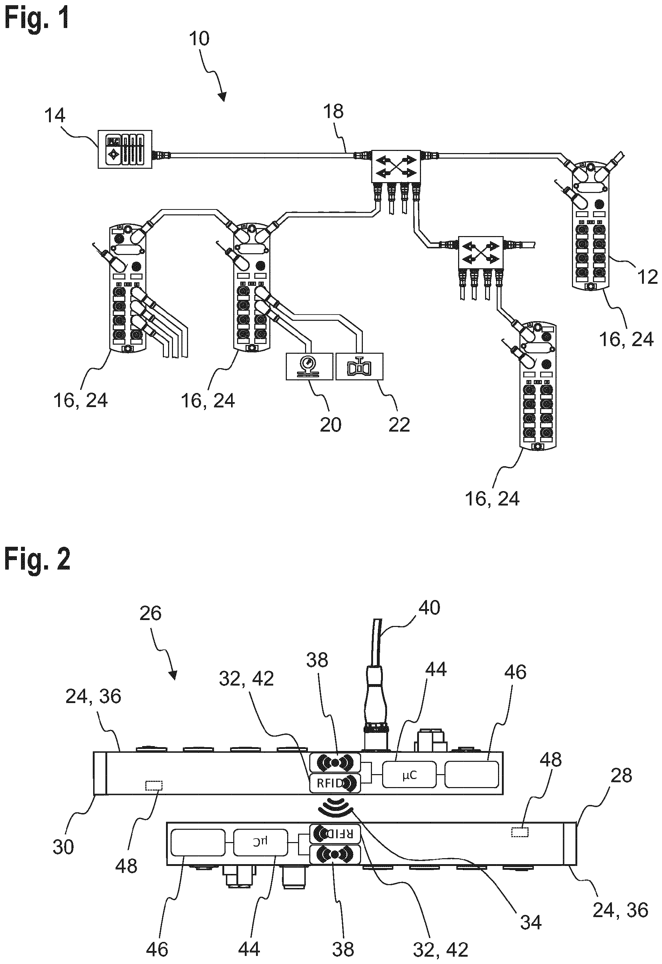

Fig. 1 zeigt schematisch eine dezentral aufgebaute Industrieanlage 10 mit mehreren örtlich verteilt angeordneten Automatisierungskomponenten 12. Zu den Automatisierungskomponenten 12 gehören insbesondere eine Steuerung 14, mehrere Feldbusmodule 16, Feldbusleitungen 18, sowie Sensoren 20 und Aktoren 22.

Als Feldbusmodule 16 werden im Ausführungsbeispiel erfindungsgemäße Feldgeräte 24 eingesetzt, die jeweils über eine identische Hardware verfügen, jedoch je nach spezifischem Anwendungszweck unterschiedlich konfiguriert sein können.

Der Einsatz erfindungsgemäßer Feldgeräte 24 in der Industrieanlage 10 ist insbesondere deshalb vorteilhaft, da diese besonders einfach gewartet sowie bei Bedarf ausgetauscht werden können.

Fig. 2 zeigt eine schematische Darstellung eines erfindungsgemäßen Systems 26 mit zwei baugleichen erfindungsgemäßen Feldgeräten 24 einer beispielhaften Ausführungsform.

Eines der beiden in Fig. 2 dargestellten Feldgeräte 24 ist beispielsweise ein innerhalb der Industrieanlage 10 aus Fig. 1 angeordnetes auszutauschendes Feldgerät 28 (nachfolgend auch als erstes Feldgerät 28 bezeichnet).

Das andere der beiden in Fig. 2 dargestellten Feldgeräte 24 dient als Ersatzgerät 30 (nachfolgend auch als zweites Feldgerät 28 bezeichnet).

Die Feldgeräte 24 weisen jeweils einen internen RFID-Transponder 32 auf. Dieser ist dazu ausgebildet, in einem ersten Betriebsmodus des betreffenden Feldgeräts 24 mittels eines extern bereitgestellten elektromagnetischen Wechselfeldes 34 Daten an ein externes Gerät 36 zu senden und/oder Daten von einem externen Gerät 36 zu empfangen.

Im Ausführungsbeispiel ist der erste Betriebsmodus dadurch charakterisiert, dass sich das jeweilige Feldgerät 24 in einem passiven Zustand befindet. Beispielsweise kann es ausgeschaltet und/oder von einer externen Energieversorgung getrennt sein.

In dem in Fig. 2 gezeigten System 26 kann das auszutauschende Feldgerät 28 für das Ersatzgerät 30 als ein externes Gerät 36 angesehen werden. Umgekehrt kann auch das Ersatzgerät 30 für das auszutauschende Feldgerät 28 als ein externes Gerät 36 angesehen werden.

Vereinfacht ausgedrückt stellt also jedes der beiden Feldgeräte 24 für das jeweils andere Feldgerät 24 ein externes Gerät 36 dar.

Die beiden Feldgeräte 24 weisen außerdem jeweils eine Kommunikationseinheit 38 auf, die dazu ausgebildet ist, in einem zweiten Betriebsmodus des betreffenden Feldgeräts 24 ein elektromagnetisches Wechselfeld 34 zu erzeugen. Mit diesem Wechselfeld 34 können Daten an ein externes Gerät 36 gesendet und/oder von einem externen Gerät 36 empfangen werden, insbesondere aufgrund einer Modulation des erzeugten elektromagnetischen Wechselfeldes 34.

Im Ausführungsbeispiel ist der zweite Betriebsmodus dadurch charakterisiert, dass sich das jeweilige Feldgerät 24 in einem aktiven Zustand befindet, insbesondere in einem eingeschalteten Zustand. In diesem Zustand wird eine Energie bereitgestellt, beispielsweise durch eine Verbindung 40 zu einer externen Energiequelle. Die Energie kann durch die Kommunikationseinheit 38 des jeweiligen Feldgeräts 24 genutzt werden, um das elektromagnetische Wechselfeld 34 bereitzustellen.

Die Kommunikationseinheiten 38 der Feldgeräte 24 sind jeweils dazu ausgebildet, im zweiten Betriebsmodus Daten an einen externen RFID-Transponder 42 zu senden und/oder Daten von dem externen RFID-Transponder 42 auszulesen.

Bei dem externen RFID-Transponder 42 kann es sich, wie in Fig. 2 gezeigt, auch um den internen RFID-Transponder 32 eines externen Geräts 36 handeln. Vereinfacht ausgedrückt stellt der interne RFID-Transponder 32 der beiden Feldgeräte 24 für das jeweils andere Feldgerät 24 also einen externen RFID-Transponder 42 dar.

Die in Fig. 2 gezeigten Feldgeräte 24 weisen außerdem jeweils einen Mikrocontroller 44, µC, sowie einen Speicher 46 auf, die mit der Kommunikationseinheit 38 des jeweiligen Feldgeräts 24 elektrisch verbunden sind, insbesondere durch Kabel, Leiter oder Leiterbahnen.

Der Mikrocontroller 44 ist beispielsweise dazu ausgebildet, das Senden und/oder Empfangen von Daten durch die Kommunikationseinheit 38, das Verarbeiten von Daten sowie das Speichern und/oder Abrufen von Daten aus dem Speicher 46 zu steuern.

Optional können der Mikrocontroller 44 sowie der Speicher 46 auch mit dem internen RFID-Transponder 32 des jeweiligen Feldgeräts 24 elektrisch verbunden sein.

Alternativ ist es aber auch möglich, dass der interne RFID-Transponder 32 als eigenständige Komponente innerhalb des jeweiligen Feldgeräts 24 ausgebildet ist, insbesondere ohne direkten elektrischen Kontakt zur Kommunikationseinheit 38 und/oder zum Mikrocontroller 44 und/oder zum Speicher 46. In diesem Falle kann die Kommunikationseinheit 38 dazu ausgebildet sein, Daten aus dem internen RFID-Transponder 32 desselben Feldgeräts 24 auszulesen oder in diesen zu schreiben. Es kann also ein kontaktloser Datenaustausch innerhalb desselben Feldgeräts 24 zwischen dem internen RFID-Transponder 32 und der Kommunikationseinheit 38 stattfinden.

In dem in Fig. 2 gezeigten Beispiel weisen die Feldgeräte 24 außerdem jeweils eine optionale Batterie 48 auf. Die internen RFID-Transponder 32 der jeweiligen Feldgeräte 24 sind dazu ausgebildet, Energie für ihren Betrieb aus extern bereitgestellten elektromagnetischen Wechselfeldern 34 sowie optional zusätzlich aus der Batterie 48 zu beziehen. Selbstverständlich können statt der Batterie 48 auch andere Energiequellen eingesetzt werden, beispielsweise Kondensatoren.

Die internen RFID-Transponder 32 können als passive oder semiaktive Transponder ausgebildet sein.

Das externe elektromagnetischen Wechselfeld 34 kann selbstverständlich auch durch ein externes Gerät 36 bereitgestellt werden. Dies ist in Fig. 2 gezeigt. Dort stellt das aktive Ersatzgerät 30 mittels seiner Kommunikationseinheit 38 das elektromagnetische Wechselfeld 34 bereit, welches durch das passive auszutauschende Feldgerät 28 als Energiequelle für den Betrieb seines internen RFID-Transponders 32 und dadurch auch zum Datenaustausch mit dem Ersatzgerät 30 genutzt werden kann.

Mit anderen Worten können das auszutauschende Feldgerät 28 und das Ersatzgerät 30 also miteinander kommunizieren, wenn sich das auszutauschende Feldgerät 28 im ersten (passiven) Betriebsmodus befindet und sich das Ersatzgerät 30 im zweiten (aktiven) Betriebsmodus befindet.

Dies ermöglicht einen einfachen und fehlerunanfälligen Feldgeräteaustausch, insbesondere durch ein erfindungsgemäßes Verfahren. Nachfolgend wird eine erste Ausführungsvariante eines Verfahrens zum Austauschen eines Feldgeräts 24 anhand von Fig. 2 beispielhaft erläutert.

In einem ersten Schritt des Verfahrens speichert das auszutauschende Feldgerät 28 gerätespezifische Daten in seinem internen RFID-Transponder 32 und/oder dem Speicher 46. Der erste Schritt kann insbesondere während eines Betriebs oder sogar vor einer Inbetriebnahme des auszutauschenden Feldgeräts 28 erfolgen.

In einem zweiten Schritt des Verfahrens stellt das Ersatzgerät 30 mittels seiner Kommunikationseinheit 38 ein elektromagnetisches Wechselfeld 34 bereit. Die hierfür notwendige Energie bezieht es im Ausführungsbeispiel beispielsweise über die Verbindung 40 von einer externen Energiequelle.

In einem dritten Schritt des Verfahrens liest das Ersatzgerät 30 die gespeicherten gerätespezifischen Daten mittels des bereitgestellten elektromagnetischen Wechselfeldes 34 aus. Dazu kommuniziert es mit dem auszutauschenden Feldgerät 28 über dessen internen RFID-Transponder 32. Die gerätespezifischen Daten können vom internen RFID-Transponder 32 insbesondere durch eine Modulation bzw. Veränderung des im zweiten Schritt bereitgestellten Wechselfeldes 34 an die Kommunikationseinheit 38 des Ersatzgeräts 30 übertragen werden.

Vereinfacht ausgedrückt werden die gerätespezifischen Daten im dritten Schritt des Verfahrens vom auszutauschenden Feldgerät 28 zum Ersatzgerät 30 kopiert, sodass das Ersatzgerät 30 nach Abschluss dieses Verfahrensschritts eine Kopie der gerätespezifischen Daten umfasst.

Das auszutauschende Feldgerät 28 muss zum Übertragen der gerätespezifischen Daten nicht zwingend aktiv bzw. eingeschaltet sein. Es kann sich beim Übertragen der Daten auch im ersten Betriebsmodus befinden, also in einem passiven und/oder ausgeschalteten Zustand.

Im Ausführungsbeispiel wird der dritte Schritt dadurch initiiert, dass das auszutauschende Feldgerät 28 und das Ersatzgerät 30 aneinandergehalten werden. Dadurch wird der interne RFID-Transponder 32 des auszutauschenden Feldgeräts 28 in den Wirkbereich des bereitgestellten elektromagnetischen Wechselfeldes 34 des Ersatzgeräts 30 gebracht. Es ist insbesondere denkbar, dass keine weiteren Nutzerinteraktionen zum Auslesen der Daten erforderlich sind.

In einem vierten Schritt des Verfahrens nutzt der Mikrocontroller 44 des Ersatzgeräts 30 die ausgelesenen bzw. kopierten gerätespezifischen Daten, um das Ersatzgerät 30 zu konfigurieren, insbesondere um eine Software des Ersatzgeräts 30 so einzurichten, dass es innerhalb der Industrieanlage 10 dieselben Aufgaben erfüllen kann, die zuvor vom auszutauschenden Feldgerät 28 übernommen wurden.

In einem fünften Schritt des Verfahrens wird das auszutauschende Feldgerät 28 durch das konfigurierte Ersatzgerät 30 ausgetauscht.

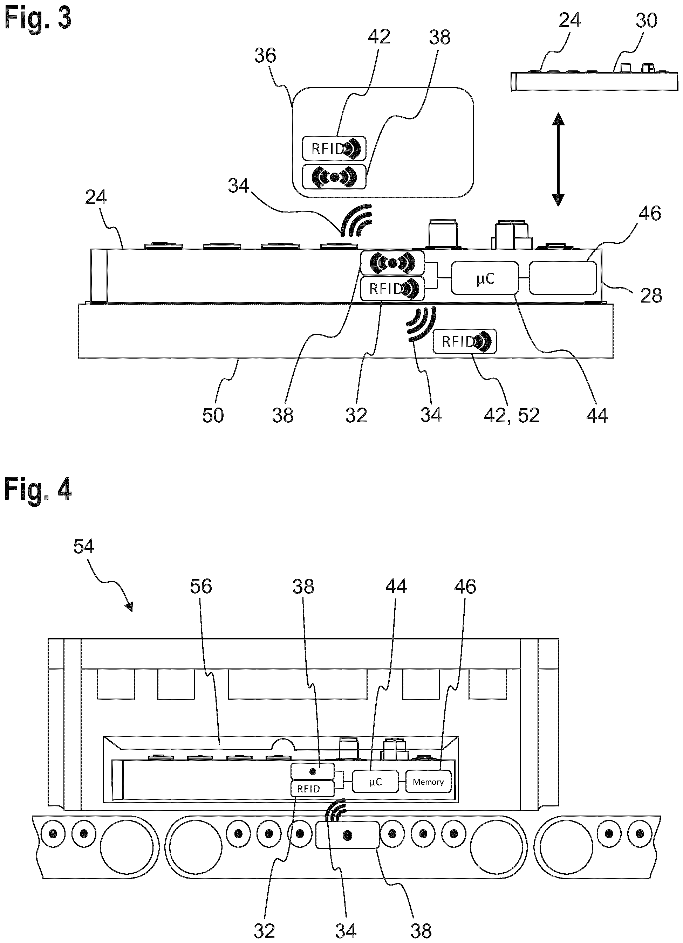

Eine weitere alternative Ausführungsvariante eines erfindungsgemäßen Verfahrens zum Austauschen eines Feldgeräts 24 wird nachfolgend anhand von Fig. 3 erläutert.

Das Verfahren sowie die in Fig. 3 dargestellten Feldgeräte 24 entsprechen im Wesentlichen den zuvor beschriebenen Ausführungsbeispielen, sodass im Folgenden lediglich auf die Unterschiede eingegangen wird. Gleiche und funktionsgleiche Bauteile sind mit den gleichen Bezugszeichen versehen.

In Fig. 3 ist eine Feldgerätehalterung 50 gezeigt, die beispielsweise an einem Feldgeräteeinsatzort innerhalb der in Fig. 1 gezeigten Industrieanlage 10 fest verbaut ist.

In die Feldgerätehalterung 50 ist ein externer RFID-Transponder 42 integriert, insbesondere ein geräteexterner RFID-Transponder 52.

In Fig. 3 ist ein auszutauschendes Feldgerät 28 in die Feldgerätehalterung 50 eingesetzt.

Alternativ kann der geräteexterne RFID-Transponder 52 auch direkt an einem Maschinenbett angebracht sein und das auszutauschende Feldgerät 28 über dem geräteexternen RFID-Transponder 52 angeordnet sein.

Im Ausführungsbeispiel soll das auszutauschende Feldgerät 28 durch ein Ersatzgerät 30 ersetzt werden, wozu ein erfindungsgemäßes Verfahren zum Ersetzen eines Feldgeräts 24 gemäß einer zweiten Ausführungsvariante angewendet wird.

In einem ersten Schritt des Verfahrens überträgt das auszutauschende Feldgerät 28 mittels seiner Kommunikationseinheit 38 gerätespezifische Daten an den geräteexternen RFID-Transponder 52, die dann in diesem, insbesondere dessen internen Speicher, oder einem mit diesem verbundenen Speicher gespeichert werden.

In einem zweiten Schritt des Verfahrens wird das auszutauschende Feldgerät 28 aus der Feldgerätehalterung 50 bzw. vom Maschinenbett entfernt und durch das Ersatzgerät 30 ersetzt.

In einem dritten Schritt des Verfahrens stellt das Ersatzgerät 30 mittels seiner Kommunikationseinheit 38 ein elektromagnetisches Wechselfeld 34 bereit.

In einem vierten Schritt des Verfahrens liest das Ersatzgerät 30 die gespeicherten gerätespezifischen Daten mittels des bereitgestellten elektromagnetischen Wechselfeldes 34 aus dem geräteexternen RFID-Transponder 52 aus.

In einem fünften Schritt des Verfahrens nutzt der Mikrocontroller 44 des Ersatzgeräts 30 die ausgelesenen gerätespezifischen Daten, um das Ersatzgerät 30 zu konfigurieren, insbesondere um eine Software des Ersatzgeräts 30 so einzurichten, dass es innerhalb der Industrieanlage 10 dieselben Aufgaben erfüllen kann, die zuvor vom auszutauschenden Feldgerät 28 übernommen wurden.

In Fig. 3 ist außerdem ein externes Gerät 36 gezeigt, beispielsweise ein Lesegerät oder Smartphone, das ebenfalls eine Kommunikationseinheit 38 sowie optional einen externen RFID-Transponder 42 aufweist.

Selbstverständlich ist zusätzlich oder alternativ zur Kommunikation mit dem geräteexternen RFID-Transponder 52 auch eine Datenübertragung zwischen dem auszutauschenden Feldgerät 28 oder dem Ersatzgerät 30 mit dem externen Gerät 36 möglich. Beispielsweise kann das externe Gerät 36 mittels seiner Kommunikationseinheit 38 ein elektromagnetisches Wechselfeld 34 bereitstellen, welches durch die internen RFID-Transponder 32 der jeweiligen Feldgeräte 24 zur Datenübertragung genutzt werden kann.

Fig. 4 zeigt eine schematische Darstellung eines Logistiksystems 54 und ein verpacktes erfindungsgemäßes Feldgerät 24 einer beispielhaften Ausführungsform.

Das Feldgerät 24 entspricht im Wesentlichen wieder den zuvor beschriebenen Ausführungsbeispielen, sodass im Folgenden lediglich auf die Unterschiede eingegangen wird. Gleiche und funktionsgleiche Bauteile sind mit den gleichen Bezugszeichen versehen.

Wie in Fig. 4 gezeigt, ist das Feldgerät 24 in einer Verpackung 56 verpackt und wird durch das Logistiksystem 54 befördert.

Das Logistiksystem 54 weist eine Kommunikationseinheit 38 auf, die dazu ausgebildet ist, ein elektromagnetisches Wechselfeld 34 zu erzeugen, mit welchem Daten an den internen RFID-Transponder 32 des verpackten Feldgeräts 24 übertragen werden können.

Das Logistiksystem 54 bzw. dessen Kommunikationseinheit 38 können insbesondere in einem erfindungsgemäßen Verfahren zum Konfigurieren eines Feldgeräts 24 eingesetzt werden, welches im Folgenden beispielhaft erläutert wird.

In einem ersten Schritt des Verfahrens stellt die Kommunikationseinheit 38 des Logistiksystems 54 ein elektromagnetisches Wechselfeld 34 bereit, das gerätespezifische Daten umfasst.

In einem zweiten Schritt des Verfahrens empfängt und speichert der interne RFID-Transponder 32 des Feldgeräts 24 die gerätespezifischen Daten. Während dieses Schritts ist das Feldgerät 24 in der Verpackung 56 verpackt. Das Feldgerät 24 befindet sich dabei in einem ersten Betriebsmodus, insbesondere in einem passiven und/oder ausgeschalteten Zustand.

In einem dritten Schritt des Verfahrens wird das Feldgerät 24 mittels der gespeicherten gerätespezifischen Daten konfiguriert. Dieser Schritt kann insbesondere erfolgen, während das Feldgerät 24 sich in einem zweiten Betriebsmodus befindet, insbesondere in einem aktiven und/oder eingeschalteten Zustand. Beispielsweise kann der dritte Schritt des Verfahrens nach der Entnahme des Feldgeräts 24 aus der Verpackung 56 und Installation am vorgesehen Einbauort erfolgen.

## Patentansprüche

1. Feldgerät für eine Industrieanlage (10), umfassend
einen internen RFID-Transponder (32), der dazu ausgebildet ist, in einem ersten Betriebsmodus des Feldgeräts (24) mittels eines extern bereitgestellten elektromagnetischen Wechselfeldes (34) Daten an ein externes Gerät (36) zu senden und/oder Daten von einem externen Gerät (36) zu empfangen, und
eine Kommunikationseinheit (38), die dazu ausgebildet ist, in einem zweiten Betriebsmodus des Feldgeräts (24) ein elektromagnetisches Wechselfeld (34) zu erzeugen, mit dem Daten an ein externes Gerät (36) gesendet und/oder von einem externen Gerät (36) empfangen werden können.

2. Feldgerät nach Anspruch 1, wobei der erste Betriebsmodus dadurch charakterisiert ist, dass sich das Feldgerät (24) in einem passiven Zustand befindet, insbesondere in einem ausgeschalteten Zustand.

3. Feldgerät nach Anspruch 1 oder 2, wobei der zweite Betriebsmodus dadurch charakterisiert ist, dass sich das Feldgerät (24) in einem aktiven Zustand befindet, insbesondere in einem eingeschalteten Zustand.

4. Feldgerät nach einem der vorhergehenden Ansprüche, wobei die Kommunikationseinheit (38) dazu ausgebildet ist, im zweiten Betriebsmodus Daten an einen externen RFID-Transponder (42) zu senden und/oder Daten von dem externen RFID-Transponder (42) auszulesen.

5. Feldgerät nach einem der vorhergehenden Ansprüche, wobei der interne RFID-Transponder (32) dazu ausgebildet ist, Energie für seinen Betrieb aus einer Batterie (48) und/oder einem extern bereitgestellten elektromagnetischen Wechselfeld (34) zu beziehen.

6. Feldgerät nach einem der vorhergehenden Ansprüche, wobei der interne RFID-Transponder (32) von der Kommunikationseinheit (38) elektrisch isoliert ist.

7. System, umfassend ein erstes Feldgerät (24, 28) gemäß einem der vorhergehenden Ansprüche und ein zweites Feldgerät (24, 30) gemäß einem der vorhergehenden Ansprüche, insbesondere wobei das erste Feldgerät (24, 28) und das zweite Feldgerät (24, 30) baugleich sind, wobei das erste Feldgerät (24, 28) und das zweite Feldgerät (24, 30) dazu ausgebildet sind, miteinander zu kommunizieren, wenn sich eines der Feldgeräte (24, 28) im ersten Betriebsmodus befindet und sich das andere Feldgerät (24, 30) im zweiten Betriebsmodus befindet.

8. Verfahren zum Austauschen eines auszutauschenden Feldgeräts (28) gemäß einem der Ansprüche 1 bis 6 durch ein baugleiches Ersatzgerät (30), umfassend die Schritte:
- Speichern von gerätespezifischen Daten;
- Bereitstellen eines elektromagnetischen Wechselfeldes (34) mittels der Kommunikationseinheit (38) des Ersatzgeräts (30);
- Auslesen der gespeicherten gerätespezifischen Daten durch das Ersatzgerät (30) mittels des bereitgestellten elektromagnetischen Wechselfeldes (34);
- Konfigurieren des Ersatzgeräts (30) mittels der ausgelesenen gerätespezifischen Daten; und
- Austauschen des auszutauschenden Feldgeräts (28) durch das Ersatzgerät (30).

9. Verfahren nach Anspruch 8, wobei das Ersatzgerät (30) zum Bereitstellen des elektromagnetischen Wechselfeldes (34) an eine Energieversorgung angeschlossen ist.

10. Verfahren nach Anspruch 8 oder 9, wobei das Auslesen der gespeicherten gerätespezifischen Daten aus dem auszutauschenden Feldgerät (28) durch eine Datenübertragung zwischen der Kommunikationseinheit (38) des Ersatzgeräts (30) und des internen RFID-Transponders (32) des auszutauschenden Feldgeräts (28) erfolgt.

11. Verfahren nach einem der Ansprüche 8 bis 10, wobei sich das auszutauschende Feldgerät (28) beim Übertragen der gerätespezifischen Daten im ersten Betriebsmodus befindet.

12. Verfahren nach einem der Ansprüche 8 bis 11, wobei das Auslesen dadurch initiiert wird, dass das auszutauschende Feldgerät (28) und das Ersatzgerät (30) aneinandergehalten werden.

13. Verfahren nach Anspruch 8 oder 9, wobei die gerätespezifischen Daten in einem geräteexternen RFID-Transponder (52) gespeichert werden, der an einem Einbauort innerhalb einer Industrieanlage (10) fest verbaut ist, und wobei das Auslesen aus dem geräteexternen RFID-Transponder (52) erfolgt.

14. Verfahren nach Anspruch 13, wobei der Einbauort eine Feldgerätehalterung (50) oder eine Position an einem Maschinenbett ist.

15. Verfahren zum Konfigurieren eines Feldgeräts (24) gemäß einem der Ansprüche 1 bis 6, umfassend die Schritte:
- Bereitstellen eines elektromagnetischen Wechselfeldes (34), das gerätespezifische Daten umfasst, mittels einer Kommunikationseinheit (38) eines Logistiksystems (54);
- Empfangen und speichern der gerätespezifischen Daten durch den internen RFID-Transponder (32) des Feldgeräts (24), während sich das Feldgerät (24) innerhalb einer Verpackung (56) befindet; und
- Konfigurieren des Feldgeräts (24) mittels der gespeicherten gerätespezifischen Daten.

## Geänderte Patentansprüche

### Geänderte Patentansprüche gemäss Regel 137(2) EPÜ.

1. Feldgerät für eine Industrieanlage (10), umfassend
einen internen RFID-Transponder (32), der dazu ausgebildet ist, in einem ersten Betriebsmodus des Feldgeräts (24) mittels eines extern bereitgestellten elektromagnetischen Wechselfeldes (34) Daten an ein externes Gerät (36) zu senden und/oder Daten von einem externen Gerät (36) zu empfangen, und
eine Kommunikationseinheit (38), die dazu ausgebildet ist, in einem zweiten Betriebsmodus des Feldgeräts (24) ein elektromagnetisches Wechselfeld (34) zu erzeugen, mit dem Daten an ein externes Gerät (36) gesendet und/oder von einem externen Gerät (36) empfangen werden können, wobei der interne RFID-Transponder (32) von der Kommunikationseinheit (38) elektrisch isoliert ist.

2. Feldgerät nach Anspruch 1, wobei der erste Betriebsmodus dadurch charakterisiert ist, dass sich das Feldgerät (24) in einem passiven Zustand befindet, insbesondere in einem ausgeschalteten Zustand.

3. Feldgerät nach Anspruch 1 oder 2, wobei der zweite Betriebsmodus dadurch charakterisiert ist, dass sich das Feldgerät (24) in einem aktiven Zustand befindet, insbesondere in einem eingeschalteten Zustand.

4. Feldgerät nach einem der vorhergehenden Ansprüche, wobei die Kommunikationseinheit (38) dazu ausgebildet ist, im zweiten Betriebsmodus Daten an einen externen RFID-Transponder (42) zu senden und/oder Daten von dem externen RFID-Transponder (42) auszulesen.

5. Feldgerät nach einem der vorhergehenden Ansprüche, wobei der interne RFID-Transponder (32) dazu ausgebildet ist, Energie für seinen Betrieb aus einer Batterie (48) und/oder einem extern bereitgestellten elektromagnetischen Wechselfeld (34) zu beziehen.

6. System, umfassend ein erstes Feldgerät (24, 28) gemäß einem der vorhergehenden Ansprüche und ein zweites Feldgerät (24, 30) gemäß einem der vorhergehenden Ansprüche, insbesondere wobei das erste Feldgerät (24, 28) und das zweite Feldgerät (24, 30) baugleich sind, wobei das erste Feldgerät (24, 28) und das zweite Feldgerät (24, 30) dazu ausgebildet sind, miteinander zu kommunizieren, wenn sich eines der Feldgeräte (24, 28) im ersten Betriebsmodus befindet und sich das andere Feldgerät (24, 30) im zweiten Betriebsmodus befindet.

7. Verfahren zum Austauschen eines auszutauschenden Feldgeräts (28) gemäß einem der Ansprüche 1 bis 5 durch ein baugleiches Ersatzgerät (30), umfassend die Schritte:
- Speichern von gerätespezifischen Daten;
- Bereitstellen eines elektromagnetischen Wechselfeldes (34) mittels der Kommunikationseinheit (38) des Ersatzgeräts (30);
- Auslesen der gespeicherten gerätespezifischen Daten durch das Ersatzgerät (30) mittels des bereitgestellten elektromagnetischen Wechselfeldes (34);
- Konfigurieren des Ersatzgeräts (30) mittels der ausgelesenen gerätespezifischen Daten; und
- Austauschen des auszutauschenden Feldgeräts (28) durch das Ersatzgerät (30).

8. Verfahren nach Anspruch 7, wobei das Ersatzgerät (30) zum Bereitstellen des elektromagnetischen Wechselfeldes (34) an eine Energieversorgung angeschlossen ist.

9. Verfahren nach Anspruch 7 oder 8, wobei das Auslesen der gespeicherten gerätespezifischen Daten aus dem auszutauschenden Feldgerät (28) durch eine Datenübertragung zwischen der Kommunikationseinheit (38) des Ersatzgeräts (30) und des internen RFID-Transponders (32) des auszutauschenden Feldgeräts (28) erfolgt.

10. Verfahren nach einem der Ansprüche 7 bis 9, wobei sich das auszutauschende Feldgerät (28) beim Übertragen der gerätespezifischen Daten im ersten Betriebsmodus befindet.

11. Verfahren nach einem der Ansprüche 7 bis 10, wobei das Auslesen dadurch initiiert wird, dass das auszutauschende Feldgerät (28) und das Ersatzgerät (30) aneinandergehalten werden.

12. Verfahren nach Anspruch 7 oder 8, wobei die gerätespezifischen Daten in einem geräteexternen RFID-Transponder (52) gespeichert werden, der an einem Einbauort innerhalb einer Industrieanlage (10) fest verbaut ist, und wobei das Auslesen aus dem geräteexternen RFID-Transponder (52) erfolgt.

13. Verfahren nach Anspruch 12, wobei der Einbauort eine Feldgerätehalterung (50) oder eine Position an einem Maschinenbett ist.

14. Verfahren zum Konfigurieren eines Feldgeräts (24) gemäß einem der Ansprüche 1 bis 5, umfassend die Schritte:
- Bereitstellen eines elektromagnetischen Wechselfeldes (34) zur Übertragung gerätespezifischer Daten mittels einer Kommunikationseinheit (38) eines Logistiksystems (54);
- Empfangen und speichern der gerätespezifischen Daten durch den internen RFID-Transponder (32) des Feldgeräts (24), während sich das Feldgerät (24) innerhalb einer Verpackung (56) befindet; und
Konfigurieren des Feldgeräts (24) mittels der gespeicherten gerätespezifischen Daten.
